# EUROPÄISCHE PATENTSCHRIFT

(11) **EP 3 526 091 B1**
(45) Veröffentlichungstag und Bekanntmachung des Hinweises auf die Patenterteilung: **18.01.2023**
(21) Anmeldenummer: 17761491.4
(22) Anmeldetag: 04.09.2017
(51) Int. Cl.: B60W 30/09, B60W 30/095, B60W 10/18, B60W 10/20, B60T 8/24

(54) **AUSWEICHUNTERSTÜTZUNG FÜR EIN FAHRZEUG**
SWERVE ASSIST IN A VEHICLE
SYSTÈME D'AIDE À L'ÉVITEMENT POUR VÉHICULE

(30) Priorität: 11.10.2016 DE 102016219757
(43) Veröffentlichungstag der Anmeldung: 21.08.2019
(73) Patentinhaber: Volkswagen Aktiengesellschaft, 38440 Wolfsburg (DE)
(72) Erfinder: WALL, Maike, 38106 Braunschweig (DE)
(86) Internationale Anmeldenummer: PCT/EP2017/072040
(87) Internationale Veröffentlichungsnummer: WO 2018/068945

(56) Entgegenhaltungen:
- CN-A- 102 815 298
- DE-A1-102008 040 077
- DE-A1-102011 106 082
- DE-A1-102014 005 924
- DE-A1-102014 016 567
- US-A1- 2005 203 705

## Beschreibung

Die vorliegende Erfindung betrifft eine Ausweichunterstützung für ein Fahrzeug, mit welcher ein Fahrer des Fahrzeugs beim Ausweichen insbesondere vor einem Hindernis unterstützt wird.

Die DE 10 2008 005 999 A1 beschreibt die Unterstützung des Fahrers eines Fahrzeugs beim Halten einer durch Fahrspurmarkierungen begrenzten Fahrspur. Dabei kann auch mit einer gezielten Einzelradbremsung ein der Spurverlassungstendenz entgegenwirkendes Giermoment erzeugt werden. Während die DE 10 2008 005 999 A1 eine Spurhalteassistenzfunktion (d.h. eine Komfortfunktion) beschreibt, bei welcher das Fahrzeug innerhalb von Fahrspurmarkierungen gehalten wird, handelt es sich bei der erfindungsgemäßen Ausweichunterstützung um eine Sicherheitsfunktion, die den Fahrer in einer kritischen Situation bei der Fahrzeugführung unterstützt und in der Regel eine vorhandene Fahrbahnmarkierung bei einem Ausweichmanöver ignoriert.

Die DE 10 2005 003 274 A1 offenbart die Vermeidung oder Minderung der Folgen von Kollisionen bei einem Ausweichen vor Hindernissen. Dabei wird der Fahrer durch eine Abbremsung des Fahrzeugs und durch eine geeignete Änderung der Lenkvorgabe des Fahrers unterstützt.

Die DE 10 2004 062 496 A1 beschreibt eine Kollisionsvermeidung oder eine Kollisionsfolgenminderung für ein Fahrzeug, welche durch eine autonome Teilbremsung in Kombination mit einem autonomen Lenkeingriff erzielt wird.

Nach dem Stand der Technik werden eine Ausweichunterstützung (d.h. eine Sicherheitsfunktion) und eine Spurhalteassistenzfunktion (d.h. eine Komfortfunktion) unterschieden. Während die Fahrsituation bei einer Ausweichunterstützung kritisch ist (d.h. eine Kollision mit einem Hindernis steht unmittelbar bevor) ist die Spurhalteassistenzfunktion von einem Hindernis und von einer Kritikalität der Fahrsituation unabhängig. Während die Ausweichunterstützung nur eingreift, wenn der Fahrer aktiv ist, kann die Spurhalteassistenzfunktion auch bei einer Inaktivität des Fahrers oder bei einer geringen Aktivität des Fahrers eingreifen. Während die Ausweichunterstützung meist auf einer berechneten Trajektorie basiert, ist dies bei einer Spurhalteassistenzfunktion in der Regel nicht der Fall. Zusammenfassend besteht ein erheblicher Unterschied zwischen einer Ausweichunterstützung und einer Spurhalteassistenzfunktion.

Die US 2005/203705 A1 und DE 10 2014 005 924 A1 offenbaren weitere Vorrichtungen zur Kollisionsvermeidung durch automatische Lenk- und Bremseingriffe.

Ausgehend von dem vorab skizzierten Stand der Technik stellt sich die vorliegende Erfindung die Aufgabe, den Fahrer eines Fahrzeugs bei einem Ausweichmanöver zu unterstützen, ohne dass es dabei zu einer Kollision kommt.

Erfindungsgemäß wird diese Aufgabe durch ein Verfahren zur Ausweichunterstützung für ein Fahrzeug nach Anspruch 1 und durch eine Vorrichtung nach Anspruch 7 gelöst. Die abhängigen Ansprüche definieren bevorzugte und vorteilhafte Ausführungsformen der vorliegenden Erfindung.

Im Rahmen der vorliegenden Erfindung wird ein Verfahren zur Ausweichunterstützung für ein Fahrzeug bereitgestellt, welches folgende Schritte umfasst:
- Erfassen eines Ausweichmanövers des Fahrzeugs. Das Ausweichmanöver wird insbesondere anhand einer Tätigkeit (z.B. Betätigung einer Bremse des Fahrzeugs oder einer Lenkung des Fahrzeugs) des Fahrers des Fahrzeugs erfasst, welche ihrerseits mit entsprechenden Sensoren des Fahrzeugs erfasst wird.
- Wenn ein Ausweichmanöver im vorherigen Schritt erfasst wurde, wird zur Verstärkung eines bereits vorhandenen Lenkmoments ein zusätzliches Lenkmoment (z.B. am Lenkrad) aufgebracht. Durch dieses zusätzliche Lenkmoment wird ein Querversatz des Fahrzeugs, welcher durch das vorhandene oder vorliegende Lenkmoment initiiert wurde, (weiter) vergrößert. Das heißt, durch das zusätzliche Lenkmoment wird ein gewünschter Querversatz des Fahrzeugs schneller erreicht. Durch das zusätzliche Lenkmoment wird demnach insbesondere die Tendenz, die aktuelle Fahrspur zu verlassen, vergrößert, um beispielsweise einem in der Fahrspur befindlichen Hindernis auszuweichen.
- Betätigen oder Aktivieren einer Einzelradbremsung des Fahrzeugs, um den Querversatz oder die Gierbewegung des Fahrzeugs, welche durch das (vorliegende) Lenkmoment und das zusätzliche Lenkmoment erzeugt wurden, weiter zu vergrößern. Mittels einer Einzelradbremsung wird ein oder werden mehrere (aber in aller Regel nicht alle) Räder des Fahrzeugs gebremst, um den Querversatz oder die Gierbewegung des Fahrzeugs zu vergrößern.

Ferner wird das zusätzliche Lenkmoment bis zu einem Zeitpunkt konstant gehalten, und ab diesem Zeitpunkt wird zum einen das zusätzliche Lenkmoment zurückgenommen und zum anderen die Einzelradbremsung betätigt.

Durch die erfindungsgemäße Kombination aus Lenkmoment und Einzelradbremsung kann der Fahrer bei seinem Ausweichmanöver derart unterstützt werden, dass es zu keiner Kollision kommt, wodurch die oben gestellte Aufgabe gelöst wird.

Das Ausweichmanöver wird insbesondere anhand einer Lenkbewegung des Fahrers erfasst. Diese Lenkbewegung verursacht dabei das (vorliegende) Lenkmoment, welches durch das zusätzlich aufgebrachte Lenkmoment erfindungsgemäß verstärkt wird.

Mit anderen Worten wird gemäß dieser Ausführungsform anhand der Lenkbewegung des Fahrers (d.h. der Fahrer dreht entsprechend am Lenkrad des Fahrzeugs) erkannt, dass der Fahrer mit dem Ausweichmanöver beginnt und beispielsweise vor einem Hindernis ausweichen möchte. Erfindungsgemäß wird dann das zusätzliche Lenkmoment in Ausweichrichtung (d.h. in der gleichen Richtung wie das vorliegende Lenkmoment) aufgebracht, so dass quasi eine zusätzliche Kraft in der vom Fahrer gewählten Drehrichtung auf das Lenkrad einwirkt. Damit wird erreicht, dass der Fahrer seinen gewünschten Lenkradeinschlag schneller erreicht. Der große Vorteil des zusätzlichen Lenkmoments liegt also darin, die initiale (vom Fahrer initiierte) Lenkbewegung zu beschleunigen, um damit schneller (und dadurch auch mehr) Querversatz zu erzielen.

Die beste Wirkung auf den Querversatz des Fahrzeugs wird mit einer Einzelradbremsung erreicht, wenn sich das Fahrzeug bereits in einer Drehbewegung oder Gierbewegung befindet. Diese Gierbewegung wird durch das Lenkmoment (einschließlich zusätzlichem Lenkmoment) erzeugt. Dabei gilt, dass der Querversatz durch die Einzelradbremsung umso mehr vergrößert wird, je stärker die Gierbewegung des Fahrzeugs beim Einsatz der Einzelradbremsung ist. Insbesondere umfasst das Erfassen des Ausweichmanövers auch ein Erfassen eines Hindernisses und ein Bestimmen eines Maßes für eine Wahrscheinlichkeit, dass das Fahrzeug mit dem Hindernis zusammenstößt. Dabei liegt ein Ausweichmanöver nur dann vor (d.h. es wird nur dann ein Ausweichmanöver erfasst), wenn das vorher bestimmte Maß über einem vorbestimmten Schwellenwert liegt. Mit anderen Worten liegt erfindungsgemäß dann ein Ausweichmanöver vor, wenn zum einen anhand der Lenkbewegung des Fahrers ein Ausweichwunsch erfasst wird und wenn zum anderen die Kritikalität der aktuellen Fahrsituation des Fahrzeugs auf das Vorliegen eines Ausweichmanövers schließen lässt (d.h. das Wahrscheinlichkeitsmaß für eine Kollision liegt über dem Schwellenwert). Dabei kann auch eine Zeitspanne bis zur voraussichtlichen Kollision mit dem Hindernis ("time to collision") zur Bestimmung des Maßes einfließen. Das Maß ist in der Regel umso größer, je kürzer diese Zeitspanne ist.

Indem das Ausweichmanöver nicht nur anhand einer Tätigkeit (z.B. Lenkbewegung) des Fahrers sondern auch anhand der Kritikalität bestimmt wird, kann die Wahrscheinlichkeit einer fälschlicherweise initiierten Ausweichunterstützung drastisch reduziert werden.

Gemäß einer bevorzugten erfindungsgemäßen Ausführungsform wird abhängig von der Lenkbewegung und einer Lage des Hindernisses eine Trajektorie bestimmt. Dabei wird die Trajektorie so bestimmt, dass sie in Richtung der Lenkbewegung von der aktuellen Fahrrichtung des Fahrzeugs abweicht und so verläuft, dass das Fahrzeug bei einer Fahrt entlang dieser Trajektorie nicht mit dem Hindernis zusammenstößt. Das zusätzliche Lenkmoment wird so aufgebracht und die Einzelradbremsung so betätigt, dass das Fahrzeug entlang der so bestimmten Trajektorie fährt.

Durch das Bestimmen und Befolgen der Trajektorie wird der Querversatz des Fahrzeugs zu Beginn des Ausweichmanövers vorteilhafterweise so erzeugt, dass das Fahrzeug nicht nur eine Kollision mit dem Hindernis vermeidet, sondern zusätzlich in einem immer lenkbaren Zustand an dem Hindernis vorbeifährt. Mit Hilfe der Trajektorie wird insbesondere eine Sollgröße bestimmt und mit einer Istgröße, welche der Fahrzeugbewegung entspricht, abgeglichen. Die Systemeingriffe (zusätzliches Lenkmoment und Einzelradbremsung) werden so eingestellt, dass sich das Fahrzeug möglichst entlang der Trajektorie bewegt.

Vorteilhafterweise ist eine Stärke der Einzelradbremsung von einer aktuellen Geschwindigkeit des Fahrzeugs abhängig. Dabei ist die Stärke der Einzelradbremsung oder der Eingriff in die Einzelradbremsung umso schwächer, je niedriger die aktuelle Geschwindigkeit des Fahrzeugs ist. Das heißt, mit zunehmender Geschwindigkeit des Fahrzeugs wird die Einzelradbremsung entsprechend stärker betätigt.

Diese erfindungsgemäße Ausführungsform weist den Vorteil auf, dass bei niedrigen Geschwindigkeiten ein stärkerer Eingriff in die Einzelradbremsung vermieden wird, welcher für den Fahrer unangenehm wäre und unnötig viel Geschwindigkeit abbauen würde. Erfindungsgemäß wäre es aber auch möglich, wenn die Einzelradbremsung über den gesamten Geschwindigkeitsbereich hinweg auf die gleiche Art und Weise ausgelegt wäre, d.h. unabhängig von der aktuellen Geschwindigkeit des Fahrzeugs wäre.

Wie bereits vorab ausgeführt wurde, besteht der Vorteil des zusätzlichen Lenkmoments darin, dass der Fahrer den gewünschten Lenkradeinschlag schneller erreicht, wodurch auch der Querversatz vergrößert wird. Wenn dieser vom Fahrer gewünschte Lenkradeinschlag einmal erreicht worden ist, kann er beispielsweise kontinuierlich vollständig zurückgenommen werden, da der weitere Querversatz nun besser durch die Betätigung der Einzelradbremsung erzielt wird.

Die erfindungsgemäße Ausweichunterstützung erfolgt im Rahmen von Beherrschbarkeitsgrenzen sowohl für das zusätzliche Lenkmoment als auch für die Einzelradbremsung. Die Beherrschbarkeitsgrenzen sind dabei derart definiert, dass der Fahrer trotz der erfindungsgemäß vorgenommenen Eingriffe (hinsichtlich zusätzlichem Lenkmoment und/oder Einzelradbremsung) jederzeit in der Lage ist, ohne große Mühe den entsprechenden Eingriff zu überstimmen. Bei einer Kombination von zwei Eingriffen (zusätzliches Lenkmoment und Einzelradbremsung) soll demnach auch die Kombination der beiden Eingriffe von dem Fahrer beherrschbar sein. Dazu kann eine Eingriffsstärkefunktion definiert werden, welche abhängig von dem zusätzlichen Lenkmoment und der Stärke der Einzelradbremsung eine Eingriffsstärke bestimmt. Diese Eingriffsstärke muss auch bei einer Kombination von zusätzlichem Lenkmoment und Einzelradbremsung immer unterhalb der Beherrschbarkeitsgrenze(n) liegen.

Das zusätzliche Lenkmoment und die Stärke der Einzelradbremsung wird daher vorteilhafterweise so gewählt, dass zum einen eine möglichst gute Wirkung (z.B. ein möglichst schnelles Erreichen eines erwünschten Querversatzes) erzielt wird und dass zum anderen die Beherrschbarkeitsgrenze nicht überschritten wird (d.h. die von der Eingriffsstärkefunktion bestimmte Eingriffsstärke liegt unterhalb der Beherrschbarkeitsgrenze). Daher wird zuerst das zusätzliche Lenkmoment beispielsweise in einer Größe aufgebracht, so dass die von der Eingriffsstärkefunktion bestimmte Eingriffsstärke nahezu der Beherrschbarkeitsgrenze entspricht. Da in dieser Situation keine Einzelradbremsung aktiviert werden dürfte (da sonst die Beherrschbarkeitsgrenze für die Kombination aus zusätzlichem Lenkmoment und Einzelradbremsung überschritten würde), wird das zusätzliche Lenkmoment zurückgenommen, wenn bzw. während die Einzelradbremsung aktiviert wird. Dadurch wird dafür gesorgt, dass die von der Eingriffsstärkefunktion bestimmte Eingriffsstärke auch für die Kombination aus zusätzlichem Lenkmoment und Einzelradbremsung immer unterhalb der Beherrschbarkeitsgrenzen liegt.

Gemäß einer weiteren erfindungsgemäßen Ausführungsform wird beispielsweise anhand der bestimmten Trajektorie erfasst, dass das Fahrzeug im Rahmen des Ausweichmanövers zurückgelenkt werden sollte. Dieses Zurücklenken erfolgt dabei in einer Richtung, welcher der Lenkbewegung entgegengerichtet ist, mit welcher das Ausweichmanöver eingeleitet wurde. In gleicher Weise wie beim Beginn des Ausweichmanövers wird nun ein weiteres zusätzliches Lenkmoment aufgebracht, um das Zurücklenken einzuleiten und/oder zu unterstützen. Schließlich wird eine weitere Einzelradbremsung des Fahrzeugs vorgenommen (insbesondere während das weitere zusätzliche Lenkmoment zurückgenommen wird), um den Querversatz des Fahrzeugs zu vergrößern.

Während der Beginn des Ausweichmanövers vom Fahrer initiiert wird, erfolgt die Einleitung des Zurücklenkens meist auf Basis der geplanten Trajektorie. Es ist allerdings auch möglich, dass der Fahrer das Zurücklenken einleitet. Das heißt, im ersten Fall (Einleitung durch ein System bzw. eine erfindungsgemäße Vorrichtung) kann dem Fahrer mit dem zusätzlichen Lenkmoment quasi ein Anstoß zum Gegenlenken oder Zurücklenken gegeben werden, wenn der Fahrer noch nicht selbst aktiv zurücklenkt. Unabhängig davon, ob das Zurücklenken vom Fahrer selbst eingeleitet wird oder nicht, wird beim Zurücklenken erfindungsgemäß äquivalent wie beim Hinlenken (d.h. beim Beginn des Ausweichmanövers) vorgegangen. Der Fahrer wird zuerst über das weitere zusätzliche Lenkmoment und anschließend über ein Giermoment unterstützt, welches durch die weitere Einzelradbremsung erzeugt wird. Damit wird der Fahrer zum einen unterstützt, in einer kritischen Situation dem Hindernis auszuweichen. Zum anderen wird bei dieser Ausführungsform der Fahrer im Rahmen der Möglichkeiten dabei unterstützt, das Fahrzeug am Ende des Ausweichmanövers wieder gerade auszurichten.

In der Regel wird bei einem Ausweichmanöver ein so genannter S-Schlag gefahren. D.h. der Fahrer lenkt zuerst nach rechts (links) und anschließend nach links (rechts). Daher ist es vorteilhaft, wenn erfindungsgemäß beim Zurücklenken in ähnlicher Weise (nur umgekehrt) wie beim Hinlenken (d.h. beim Beginn des Ausweichmanövers) vorgegangen wird. Durch eine Unterstützung über eine Verstärkung der Lenkbewegung kann sowohl das initiale Auslenken als auch das Zurücklenken des Fahrers bei einem Ausweichmanöver deutlich verstärkt werden.

Im Rahmen der vorliegenden Erfindung wird auch eine Vorrichtung zur Ausweichunterstützung für ein Fahrzeug bereitgestellt. Dabei umfasst die Vorrichtung Steuermittel, eine Lenkung des Fahrzeugs und mindestens zwei Einzelradbremsen des Fahrzeugs. Die Vorrichtung ist ausgestaltet, um mittels der Steuermittel ein Ausweichmanöver des Fahrzeugs zu erfassen und um mittels der Steuermittel zur Verstärkung eines vorliegenden Lenkmoments ein zusätzliches Lenkmoment auf die Lenkung aufzubringen. Zusätzlich ist die Vorrichtung ausgestaltet, um mittels der Steuermittel mindestens eine der Einzelradbremsen zu betätigen, um einen Querversatz des Fahrzeugs zu vergrößern. Ferner ist die Vorrichtung ausgestaltet, um das zusätzliche Lenkmoment bis zu einem Zeitpunkt konstant zu halten, und um ab diesem Zeitpunkt zum einen das zusätzliche Lenkmoment zurückzunehmen und zum anderen die Einzelradbremsung zu betätigen.

Die erfindungsgemäße Vorrichtung weist dieselben Vorteile wie das erfindungsgemäße Verfahren auf, welche vorab im Detail ausgeführt sind, so dass hier auf eine Wiederholung verzichtet wird.

Die vorliegende Erfindung nutzt durch die Kombination aus zusätzlichem Lenkmoment und Einzelradbremsung jeweils das spezifische Potenzial des jeweiligen Eingriffs aus. Zu Beginn des Ausweichmanövers steckt in einem zusätzlichen Lenkmoment ein großes Potenzial, um die Lenkbewegung zu beschleunigen. Dadurch kommt das Fahrzeug in eine Gierbewegung, welche anschließend durch die Einzelradbremsung verstärkt wird.

Die vorliegende Erfindung wird anschließend mit Bezug zu den Figuren anhand von erfindungsgemäßen Ausführungsformen im Detail beschrieben.
In Fig. 1 wird eine Situation dargestellt, bei welcher das Fahrzeug bei einem Ausweichmanöver auf ein Hindernis auffährt.
In Fig. 2 wird eine Situation dargestellt, bei welcher das Fahrzeug bei einem Ausweichmanöver von der Fahrbahn abkommt.
In Fig. 3 wird eine Situation dargestellt, bei welcher das Fahrzeug bei einem Ausweichmanöver seitlich mit einem Hindernis kollidiert.
In Fig. 4 sind der zeitliche Verlauf eines zusätzlichen Lenkmoments und einer Stärke einer Bremswirkung einer Einzelradbremsung für eine erfindungsgemäße Ausführungsform dargestellt.
In Fig. 5 ist der Flussplan eines Verfahrens zur Ausweichunterstützung gemäß einer erfindungsgemäßen Ausführungsform dargestellt.
In Fig. 6 ist schematisch ein erfindungsgemäßes Fahrzeug dargestellt.

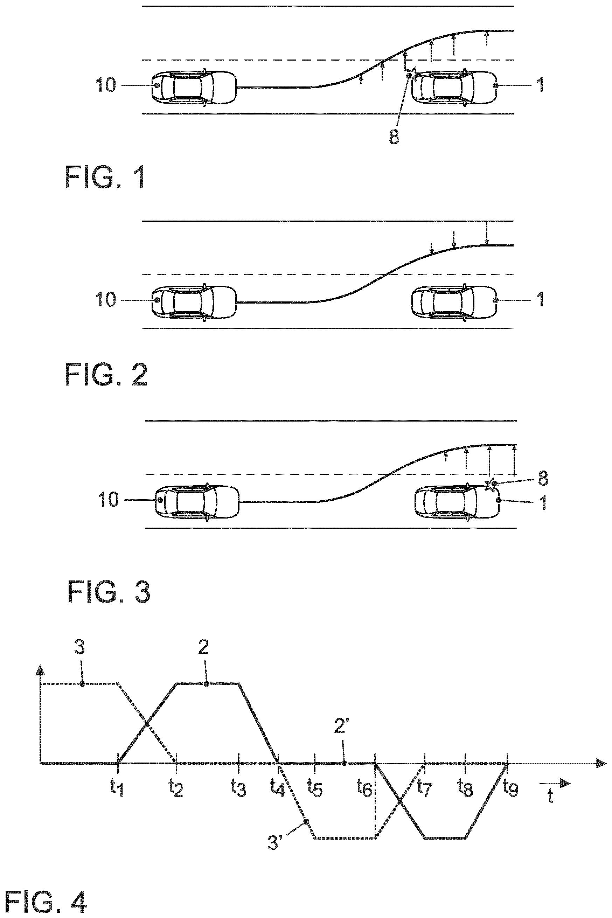

In Fig. 1 ist ein erfindungsgemäßes Fahrzeug 10 bei einem Ausweichmanöver dargestellt. Da der Fahrer des Fahrzeugs 10 zu wenig lenkt, kollidiert das Fahrzeug 10 mit einem Hindernis 1 (einem vor dem Fahrzeug 10 befindlichen anderen Fahrzeug). Dabei liegt der Auftreffpunkt 8 bei der Kollision hinten links am Hindernis 1 bzw. anderen Fahrzeug.

In Fig. 2 ist in ähnlicher Weise wie bei der Fig. 1 ein erfindungsgemäßes Fahrzeug 10 bei einem Ausweichmanöver dargestellt. In diesem Fall verharrt der Fahrer des Fahrzeugs 10 zu lange beim Herauslenken, so dass das Fahrzeug 10 von der Fahrbahn abkommt.

In Fig. 3 ist in ähnlicher Weise wie bei der Fig. 1 der Fig. 2 ein erfindungsgemäßes Fahrzeug 10 bei einem Ausweichmanöver dargestellt. In diesem Fall lenkt der Fahrer des Fahrzeugs 10 zu viel, so dass es zu einem Überschwingen und somit zu einer seitlichen Kollision mit dem Hindernis 1 kommt. Dabei liegt der Auftreffpunkt 8 bei der Kollision vorne links am Hindernis 1 bzw. anderen Fahrzeug.

In Fig. 4 sind der Verlauf der Stärke 2, 2' einer Bremswirkung einer Einzelradbremsung und der Verlauf eines zusätzlichen Lenkmoments 3, 3' über der Zeit bei einem Ausweichmanöver für eine erfindungsgemäße Ausführungsform dargestellt.

Sobald anhand einer Lenkbewegung des Fahrers und anhand der Kritikalität der Fahrsituation (Wahrscheinlichkeit einer Kollision mit einem Hindernis) ein Ausweichwunsch seitens des Fahrers oder der Beginn eines Ausweichmanövers erfasst wird, springt das zusätzliche Lenkmoment auf einen Wert, um das durch die Lenkbewegung verursachte Lenkmoment zu verstärken. Das zusätzliche Lenkmoment wird bis zu einem Zeitpunkt t₁ konstant gehalten. Ab diesem Zeitpunkt t₁ wird zum einen das zusätzliche Lenkmoment 3 zurückgenommen und zum anderen eine Einzelradbremsung des Fahrzeugs 10 aktiviert, wobei die Bremswirkung 2 kontinuierlich erhöht wird. Durch diese Betätigung der Einzelradbremsung wird der durch das (vorliegende) Lenkmoment und das zusätzliche Lenkmoment, welche sich addieren, erzeugte Querversatz weiter vergrößert.

Ab einem Zeitpunkt t₂ verharrt die Stärke 2 der Bremswirkung der Einzelradbremsung bis zu einem Zeitpunkt t₃ auf einem hohen Niveau, während das zusätzliche Lenkmoment 3 vollständig abgebaut ist. Ab dem Zeitpunkt t₃ wird die Bremswirkung der Einzelradbremsung bis zu einem Zeitpunkt t₄ vollständig zurückgenommen, wobei ab dem Zeitpunkt t₄ das zusätzliche Lenkmoment 3' in einer zum zusätzlichen Lenkmoment 3 entgegengesetzten Richtung kontinuierlich bis zu einem Zeitpunkt t₅ erhöht wird. Der Zeitpunkt t₄ markiert damit ein Zurücklenken des Fahrers des Fahrzeugs 10. Ab einem Zeitpunkt t₆ wird zum einen das zusätzliche Lenkmoment 3' zurückgenommen und zum anderen die Bremswirkung 2' einer (meist anderen) Einzelradbremsung des Fahrzeugs 10 kontinuierlich erhöht. Bei dem Zeitpunkt t₇ ist das zusätzliche Lenkmoment 3' vollständig abgebaut, während die Stärke der Bremswirkung bis zum Zeitpunkt t₈ konstant bleibt. Ab dem Zeitpunkt t₈ wird die Stärke 2' der Bremswirkung bis zu einem Zeitpunkt t₉ kontinuierlich und vollständig abgebaut.

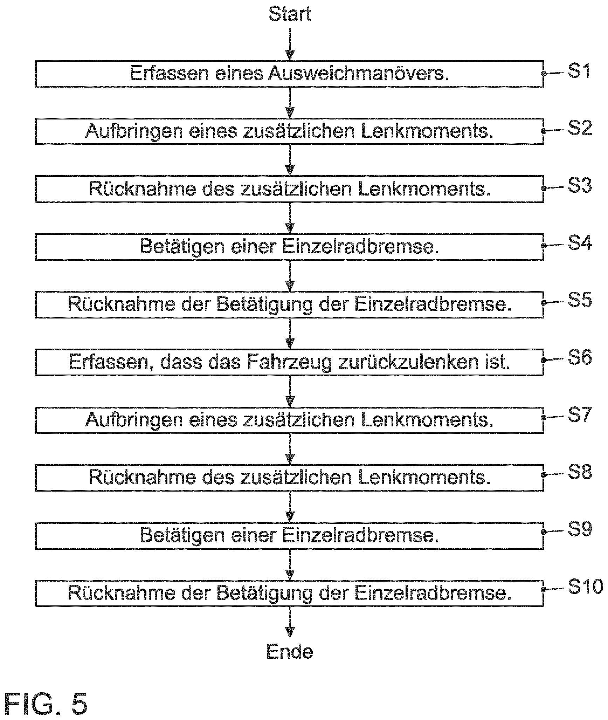

In Fig. 5 ist der Flussplan eines Verfahrens zur Ausweichunterstützung gemäß einer erfindungsgemäßen Ausführungsform dargestellt.

Im ersten Schritt S1 wird der Beginn eines Ausweichmanövers anhand einer Lenkbewegung des Fahrers zusammen mit einer Kritikalität der Fahrsituation (d.h. die Wahrscheinlichkeit mit einem Hindernis zusammenzustoßen liegt über einem Schwellenwert) erfasst. Daher wird in einem Schritt S2 ein zusätzliches Lenkmoment aufgebracht, um das durch die Lenkbewegung des Fahrers verursachte Lenkmoment zu verstärken. Im Schritt S3 wird dieses zusätzliche Lenkmoment wieder zurückgenommen, während im Schritt S4 eine Einzelradbremsung des Fahrzeugs betätigt wird. Die Schritte S3 und S4 können auch gleichzeitig ausgeführt werden. Durch die Betätigung der Einzelradbremsung im Schritt S4 wird der durch das (vorliegende) Lenkmoment und das zusätzliche Lenkmoment verursachte Querversatz des Fahrzeugs vorteilhafterweise weiter verstärkt. Im Schritt S5 wird die Betätigung der Einzelradbremsung zurückgenommen.

Im Schritt S6 wird z.B. anhand einer geplanten Trajektorie erfasst, dass das Fahrzeug zurückzulenken ist. Deshalb wird im Schritt S7 ein zusätzliches Lenkmoment aufgebracht, welches dem zusätzlichen Lenkmoment aus Schritt S2 entgegengerichtet ist. In ähnlicher Weise wie beim Beginn des Ausweichmanövers (Schritte S1 bis S5) wird durch das Aufbringen des zusätzlichen Lenkmoments im Schritt S7 ein erwünschter Querversatz des Fahrzeugs schneller erreicht. Im Schritt S8 wird das zusätzliche Lenkmoment zurückgenommen, während im Schritt S9 eine (andere) Einzelradbremsung (d.h. die Räder werden anders gebremst als im Schritt S4) des Fahrzeugs betätigt wird. In ähnlicher Weise wie die Schritte S2 und S3 können die Schritte S8 und S9 auch gleichzeitig durchgeführt werden. Schließlich wird im Schritt S10 auch die Betätigung der Einzelradbremsung zurückgenommen, so dass nach Schritt S10 weder ein zusätzliches Lenkmoment noch eine Betätigung einer Einzelradbremse auf das Fahrzeug 10 einwirkt.

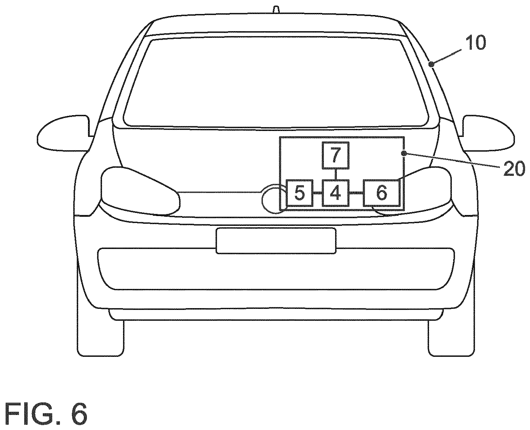

In Fig. 6 ist schematisch ein erfindungsgemäßes Fahrzeug 10 mit einer erfindungsgemäßen Vorrichtung 20 dargestellt. Die erfindungsgemäße Vorrichtung 20 umfasst dabei Steuermittel 4, mindestens zwei Einzelradbremsen 5, 6 (in der Regel können alle Räder des Fahrzeugs 10 einzeln gebremst werden) und eine Lenkung 7. Die Vorrichtung 20 ist ausgestaltet, um mittels der Steuermittel 4 ein Ausweichmanöver des Fahrzeugs beispielsweise durch eine Lenkbewegung des Fahrers zu erfassen und um mittels der Steuermittel 4 ein zusätzliches Lenkmoment auf die Lenkung 7 aufzubringen, um dadurch das von der Lenkbewegung verursachte Lenkmoment zu verstärken. Indem die Vorrichtung 20 mittels ihrer Steuermittel 4 mindestens eine der Einzelradbremsen 5, 6 betätigt, wird ein durch das (vorliegende) Lenkmoment und das zusätzliche Lenkmoment erzeugter Querversatz des Fahrzeugs 10 weiter vergrößert.

### Bezugszeichenliste

- 1: Hindernis
- 2, 2': Stärke einer Bremswirkung einer Einzelradbremsung
- 3, 3': zusätzliches Lenkmoment
- 4: Steuermittel
- 5,6: Einzelradbremse
- 7: Lenkung
- 8: Auftreffpunkt bei Kollision
- 10: Fahrzeug
- 20: Vorrichtung
- S1-S10: Verfahrensschritt
- t: Zeit
- tₓ: Zeitpunkt

## Patentansprüche

1. Verfahren zur Ausweichunterstützung für ein Fahrzeug (10), umfassend Erfassen eines Ausweichmanövers des Fahrzeugs (10), und Aufbringen eines zusätzlichen Lenkmoments (3) zur Verstärkung eines vorliegenden Lenkmoments, wenn das Ausweichmanöver erfasst wurde, und Betätigen einer Einzelradbremsung (5; 6) des Fahrzeugs (10), um einen Querversatz des Fahrzeugs (10) zu vergrößern,
dadruch gekennzeichnet,
dass das zusätzliche Lenkmoment bis zu einem Zeitpunkt (t₁) konstant gehalten wird, und dass ab diesem Zeitpunkt (t₁) zum einen das zusätzliche Lenkmoment zurückgenommen und zum anderen die Einzelradbremsung betätigt wird.

2. Verfahren nach Anspruch 1,
**dadurch gekennzeichnet,**
**dass** das Ausweichmanöver erfasst wird, indem eine Lenkbewegung eines Fahrers des Fahrzeugs erfasst wird, und
**dass** das vorliegende Lenkmoment durch die Lenkbewegung aufgebracht wird.

3. Verfahren nach einem der vorhergehenden Ansprüche,
**dadurch gekennzeichnet,**
**dass** das Erfassen des Ausweichmanövers umfasst
Erfassen eines Hindernisses (1),
Bestimmen eines Maßes für eine Wahrscheinlichkeit, dass das Fahrzeug (10) mit dem Hindernis (1) zusammenstößt, und
Erfassen des Ausweichmanövers nur dann, wenn das Maß über einem vorbestimmten Schwellenwert liegt.

4. Verfahren nach Anspruch 3,
**dadurch gekennzeichnet,**
**dass** das Verfahren ein Bestimmen einer Trajektorie abhängig von der Lenkbewegung und einer Lage des Hindernisses (1), so dass das Fahrzeug (10) bei einer Fahrt entlang der Trajektorie nicht mit dem Hindernis (1) zusammenstößt, umfasst, und
**dass** das zusätzliche Lenkmoment (3) so aufgebracht wird und die Einzelradbremsung (5; 6) so betätigt wird, dass das Fahrzeug (10) entlang der Trajektorie fährt.

5. Verfahren nach einem der vorhergehenden Ansprüche,
**dadurch gekennzeichnet,**
**dass** eine Stärke (2) einer Bremswirkung der Einzelradbremsung (5; 6) von einer Geschwindigkeit des Fahrzeugs (10) abhängig ist.

6. Verfahren nach einem der vorhergehenden Ansprüche,
**dadurch gekennzeichnet,**
**dass** erfasst wird, dass das Fahrzeug (10) zurückzulenken ist,
**dass** ein weiteres zusätzliches Lenkmoment (3') aufgebracht wird, um ein Zurücklenken des Fahrzeugs (10) einzuleiten und/oder zu unterstützen, und
**dass** die Einzelradbremsung (6; 5) des Fahrzeugs (10) betätigt wird, um einen durch das Zurücklenken erzeugten Querversatz des Fahrzeugs (10) zu vergrößern.

7. Vorrichtung zur Ausweichunterstützung für ein Fahrzeug (10),
wobei die Vorrichtung (20) Steuermittel (4) und eine Lenkung (7) des Fahrzeugs (10) umfasst,
wobei die Vorrichtung (20) ausgestaltet ist, um mittels der Steuermittel (4) ein Ausweichmanöver des Fahrzeugs (10) zu erfassen und um mittels der Steuermittel (4) zur Verstärkung eines vorliegenden Lenkmoments ein zusätzliches Lenkmoment (3) auf die Lenkung (7) aufzubringen,
wobei die Vorrichtung darüber hinaus Einzelradbremsen (5, 6) des Fahrzeugs (10) umfasst, und die Vorrichtung ausgestaltet ist, um mittels der Steuermittel (4) zumindest eine der Einzelradbremsen (5; 6) zu betätigen, um einen Querversatz des Fahrzeugs (10) zu vergrößern,
**dadurch gekennzeichnet,**
**dass** die Vorrichtung ausgestaltet ist, um das zusätzliche Lenkmoment bis zu einem Zeitpunkt (t₁) konstant zu halten, und
um ab diesem Zeitpunkt (t₁) zum einen das zusätzliche Lenkmoment zurückzunehmen und zum anderen die Einzelradbremsung zu betätigen.

## Claims

1. A method for evasion assistance for a vehicle (10), comprising:
detecting an evasive maneuver of the vehicle (10), and
applying an additional steering torque (3) to amplify an existing steering torque when the evasive maneuver has been detected, and
actuating independent wheel braking (5; 6) of the vehicle (10) to increase a transverse offset of the vehicle (10),
**characterized in that**
the additional steering torque is kept constant up to a point in time (ti), and
from this point in time (ti), the additional steering torque is reduced on the one hand, and the independent wheel braking is actuated on the other hand.

2. The method according to claim 1,
**characterized in that**
the evasive maneuver is detected by detecting a steering movement by a driver of the vehicle, and
the existing steering torque is applied by the steering movement.

3. The method according to any one of the preceding claims,
**characterized in that**
the detection of the evasive maneuver comprises:
detecting an obstacle (1),
determining an extent of a probability that the vehicle (10) will collide with the obstacle (1), and
detecting the evasive maneuver only when the measure exceeds a predetermined threshold value.

4. The method according to claim 3,
**characterized in that**
the method comprises determining a trajectory as a function of the steering movement and a location of the obstacle (1) such that the vehicle (10) does not collide with the obstacle (1) when traveling along the trajectory, and
the additional steering torque (3) is applied such that, and the independent wheel braking (5; 6) is actuated such that, the vehicle (10) travels along the trajectory.

5. The method according to any one of the preceding claims,
**characterized in that**
a strength (2) of a braking effect of the independent wheel braking (5; 6) is a function of a speed of the vehicle (10).

6. The method according to any one of the preceding claims,
**characterized in that**
it is detected that the vehicle (10) is to be steered back,
further additional steering torque (3') is applied to initiate and/or support steering back the vehicle (10), and
the independent wheel braking (6; 5) of the vehicle (10) is actuated to increase a transverse offset of the vehicle (10) generated by steering back.

7. A device for evasion assistance for a vehicle (10),
wherein the device (20) comprises control means (4) and a steering system (7) of the vehicle (10),
wherein the device (20) is configured to detect, by means of the control means (4), an evasive maneuver of the vehicle (10) and to apply an additional steering torque (3) to the steering system (7) by means of the control means (4) to amplify an existing steering torque, and
wherein the device further comprises independent wheel brakes (5, 6) of the vehicle (10), and
the device is configured to actuate at least one of the independent wheel brakes (5; 6) by means of the control means (4) in order to increase a transverse offset of the vehicle (10),
**characterized in that**
the device is configured to keep the additional steering torque constant up to a point in time (ti), and,
from this point in time (ti), to reduce the additional steering torque on the one hand and to actuate the independent wheel braking on the other hand.

## Revendications

1. Procédé d'assistance à l'évitement pour un véhicule (10), comprenant
la détection d'une manœuvre d'évitement du véhicule (10) et
l'application d'un couple de braquage (3) supplémentaire pour renforcer un couple de braquage existant, lorsque la manœuvre d'évitement a été détectée et
l'actionnement d'un freinage individuel par roue (5 ; 6) du véhicule (10), afin d'augmenter un décalage latéral du véhicule (10),
**caractérisé en ce**
**que** le couple de braquage supplémentaire est maintenu constant jusqu'à un instant (t₁) et
**que**, à partir de cet instant (t₁), d'une part le couple de braquage supplémentaire est réduit et d'autre part, le freinage individuel par roue est actionné.

2. Procédé selon la revendication 1,
**caractérisé en ce**
**que** la manœuvre d'évitement est détectée en ce qu'un mouvement de braquage d'un conducteur du véhicule est détecté et
**que** le couple de braquage existant est appliqué par le mouvement de braquage.

3. Procédé selon l'une quelconque des revendications précédentes,
**caractérisé en ce**
**que** la détection de la manœuvre d'évitement comprend
la détection d'un obstacle (1),
la détermination d'une mesure pour une probabilité que le véhicule (10) entre en collision avec l'obstacle (1) et
la détection de la manœuvre d'évitement uniquement lorsque la mesure est supérieure à une valeur seuil prédéfinie.

4. Procédé selon la revendication 3,
**caractérisé en ce**
**que** le procédé comprend une détermination d'une trajectoire en fonction du mouvement de braquage et d'une position de l'obstacle (1), de sorte que le véhicule (10) n'entre pas en collision avec l'obstacle (1) lors d'une conduite le long de la trajectoire et
**que** le couple de braquage supplémentaire (3) est appliqué et que le freinage individuel par roue (5 ; 6) est actionné de sorte que le véhicule (10) conduise le long de la trajectoire.

5. Procédé selon l'une quelconque des revendications précédentes,
**caractérisé en ce**
**qu'**une puissance (2) d'un effet de freinage du freinage individuel par roue (5 ; 6) dépend d'une vitesse du véhicule (10).

6. Procédé selon l'une quelconque des revendications précédentes,
**caractérisé en ce**
**qu'**il est détecté que le véhicule (10) est redirigé,
**qu'**un autre couple de braquage supplémentaire (3') est appliqué afin d'entreprendre et/ou d'assister une redirection du véhicule (10) et
**que** le freinage individuel par roue (6 ; 5) du véhicule (10) est actionné afin d'augmenter un décalage transversal du véhicule (10) produit par la redirection.

7. Dispositif d'assistance à l'évitement pour un véhicule (10),
dans lequel le dispositif (20) comprend un moyen de commande (4) et une direction (7) du véhicule (10),
dans lequel le dispositif (20) est équipé pour détecter, au moyen du moyen de commande (4), une manœuvre d'évitement du véhicule (10) et pour appliquer, au moyen du moyen de commande (4) afin de renforcer un couple de braquage existant, un couple de braquage supplémentaire (3) sur la direction (7),
dans lequel le dispositif comprend en outre des freins individuels de roue (5, 6) du véhicule (10) et
le dispositif est équipé pour actionner, au moyen du moyen de commande (4), au moins un des freins individuels de roue (5 ; 6) afin d'augmenter un décalage transversal du véhicule (10),
**caractérisé en ce**
**que** le dispositif est équipé pour maintenir constant le couple de braquage supplémentaire jusqu'à un instant (t₁) et
pour, à partir de cet instant (t₁), d'une part réduire le couple de braquage supplémentaire et d'autre part pour actionner le freinage individuel par roue.
